(19) Europäisches Patentamt
European Patent Office
Office européen des brevets

(11) Veröffentlichungsnummer: **0 023 955**
**B1**

(12) # EUROPÄISCHE PATENTSCHRIFT

(45) Veröffentlichungstag der Patentschrift: **21.09.83**

(51) Int. Cl.³: **C 09 B 62/415**

(21) Anmeldenummer: **80103234.3**

(22) Anmeldetag: **11.06.80**

(54) **Verbessertes Herstellungsverfahren für Disazokupferkomplex-Farbstoffe.**

(30) Priorität: **22.06.79 DE 2925210**

(43) Veröffentlichungstag der Anmeldung: **18.02.81 Patentblatt 81/7**

(45) Bekanntmachung des Hinweises auf die Patenterteilung: **21.09.83 Patentblatt 83/38**

(84) Benannte Vertragsstaaten: **CH DE FR GB LI**

(56) Entgegenhaltungen: **FR-A-2 330 738**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Jäger, Horst, Dr., Carl-Rumpff-Strasse 37, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 023 955 B1**

ACTORUM AG

# Verbessertes Herstellungsverfahren für Disazokupferkomplex-Farbstoffe

Gegenstand der Erfindung ist ein verbessertes Verfahren zur Herstellung der Farbstoffe der Formel

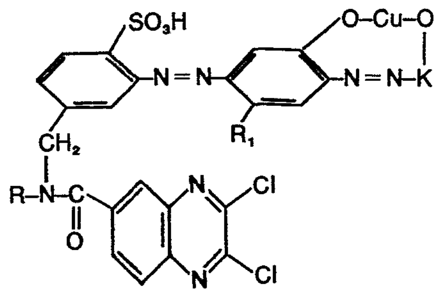

(I)

worin

R = H, $C_1$–$C_4$-Alkyl

$R_1$ = H, $C_1$–$C_2$-Alkyl, $C_1$–$C_2$-Alkoxy

K = Rest einer 1-Hydroxy- oder 2-Hydroxy-naphthalinsulfonsäure, dadurch gekennzeichnet, dass man eine Diazokomponente der Formel

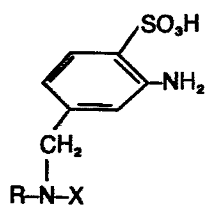

(II)

worin

X = Rest einer Acylkomponente

mit einer Kupplungskomponente der Formel

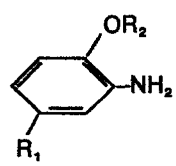

(III)

worin

$R_2$ = $C_1$–$C_2$-Alkyl

kuppelt, weiterdiazotiert, mit einer Hydroxynaphthalinsulfonsäure der Formel

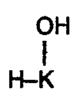

(IV)

kuppelt, entmethylierend kupfert, die Acylgruppe X abspaltet und anschliessend die Aminogruppe mit 2,3-Dichlorchinoxalin-carbonsäurechlorid kondensiert.

Beispiele für Reste X sind folgende:

$C_1$–$C_4$-Alkylcarbonyl, $C_1$–$C_4$-Alkoxycarbonyl, ggf. durch $CH_3$ oder Cl substituiertes Phenylcarbonyl und

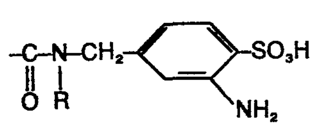

Bevorzugt bedeutet X = $COCH_3$.

Als Beispiele für Kupplungskomponenten (III) seien folgende genannt.

1-Amino-2-methoxy-benzol, 1-Amino-2-methoxy-5-methyl-benzol, 1-Amino-2,5-dimethoxy-benzol.

Geeignete Hydroxynaphthalinsulfonsäuren (IV) sind z.B:

1-Hydroxy-5-sulfo-naphthalin, 1-Hydroxy-3,6-disulfonaphthalin, 1-Hydroxy-3,7-disulfo-naphthalin, 1-Hydroxy-3,8-disulfo-naphthalin, 1-Hydroxy-4,6-disulfo-naphthalin, 1-Hydroxy-4,7-disulfo-naphthalin, 1-Hydroxy-4,8-disulfo-naphthalin, 1-Hydroxy-3,5-disulfo-naphthalin, 2-Hydroxy-3,6-disulfo-naphthalin, 2-Hydroxy-5,7-disulfo-naphthalin, 2-Hydroxy-5-, -6- oder -7-sulfo-naphthalin, 1-Hydroxy-4-sulfo-naphthalin.

Bevorzugt ist R und $R_1$ = $CH_3$.

In der Literatur ist bereits ein Verfahren zur Herstellung von Farbstoffen der Formel (I) beschrieben (vgl. Deutsche Auslegeschrift 1 444 667, Bsp. 27). Nach diesem Verfahren werden Amine der Formel

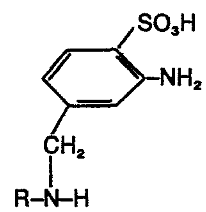

(V)

diazotiert, im essigsauren Medium mit Kupplungskomponenten (III) vereinigt. Der resultierende Aminoazofarbstoff wird diazotiert und auf eine Kupplungskomponente (IV) gekuppelt. Nach einer entmethylierenden Kupferung wird der Diazofarbstoff mit 2,3-Dichlorinoxalincarbonsäurechlorid kondensiert.

Gegenüber diesem Verfahren weist das erfindungsgemässe Verfahren den Vorteil auf, höhere Ausbeuten zu liefern.

Die Herstellung von (II) erfolgt durch Kondensation von (V) mit Acylkomponenten der Formel

$$X–Y \qquad (VI)$$

worin

Y = anionisch abspaltbaren Rest, in wässriger Phase bei tiefer Temperatur, insbesondere 0° und bei einem pH von 7–11, vorzugsweise 8,5–9,5.

Geeignete Acylkomponenten (VI) sind beispielsweise:

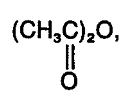, $CH_3COCl$, $ClCOCl$, $C_2H_5COCl$,

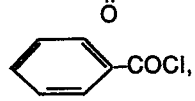, $CH_3OCOCl$, $C_2H_5OCOCl$ u.ä.

Bevorzugt steht (VI) für 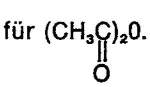.

Die angegebenen Formeln der Farbstoffe sind die der entsprechenden freien Säuren. Die Farbstoffe werden im allgemeinen in Form der Alkalisalze, insbesondere der Na-Salze, isoliert und zum Färben eingesetzt.

Beispiel 1

a) selektive Acetylierung

21,6 g 1-Amino-2-sulfo-5-N-methylaminomethylbenzol werden in 300 ml Eiswasser angerührt. Man tropft bei 0 °C 10,5 g Acetanhydrid ein und hält dabei mit verdünnter Natronlauge den pH zwischen 8,5 und 9,5. Während der Acetylierung geht das Ausgangsmaterial in Lösung. Vom Ende der Kondensation überzeugt man sich durch ein Dünnschichtchromatogramm (Platte: Kieselgel F 254 von MERCK/Laufmittel: 640 ml Methylethylketon, 128 ml 5n-Ammoniak, 128 ml Diethylamin; Auswertung: UV-Licht).

Durch Bestimmung des Nitritwertes findet man 98–99% der eingesetzten aromatischen Aminogruppe.

b) Diazotierung und Kupplung

Die Lösung wird mit 200 g Eis und 28 ml konz. Salzsäure versetzt. In diese Vorlage tropft man eine wässrige Lösung von 7 g Natriumnitrit ein. Man rührt kurz nach und entfernt den Überschuss an Nitrit mit Amidosulfonsäure.

Zu der Diazotierung lässt man dann eine Lösung einlaufen, die durch Auflösen von 13,7 g 1-Amino-2-methoxy-5-methyl-benzol in 50 ml Wasser mit 9 ml konz. Salzsäure erhalten wird. Anschliessend stellt man mit 20%iger Sodalösung auf pH 3 und erwärmt auf 35 °C. Man rührt solange unter diesen Bedingungen, bis sich im farblosen Auslauf einer Tüpfelprobe mit H-Säure die Diazokomponente nicht mehr nachweisen lässt. Der Farbstoff wird bei pH 3 ohne Salzzugabe isoliert. Er entspricht der Formel

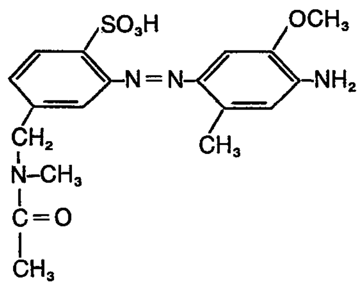

c) Diazotierung des Monoazofarbstoffs und Kupplung

Die Paste wird in 300 ml Wasser mit 5 ml konz. Natronlauge gelöst. pH 8. Nach dem Klären versetzt man die Lösung mit 6,5 g Natriumnitrit und lässt sie in eine Vorlage aus 26 ml konz. Salzsäure, 50 ml Wasser und 200 g Eis einlaufen. Man rührt 1 Stunde nach und entfernt den Überschuss an Nitrit mit Amidosulfonsäure. Die resultierende Suspension der Diazoverbindung gibt man dann innerhalb 3 Stunden zu einer Lösung von 30,4 g 1-Hydroxy-3,6-disulfo-naphthalin (liegt als Di-Na-Salz vor), 200 ml Wasser, 100 g Eis und 28 g Natriumhydrogencarbonat. Zur Beendigung der Kupplung rührt man 1 Stunde nach.

d) Entmethylierende Kupferung und Abspaltung der Acetylgruppe.

Man versetzt die Lösung des Diazofarbstoffes mit 24 ml Diethanolamin, 25 ml 25%igem Ammoniak und 28 g Kupfersulfat und erwärmt 7 Stunden auf 95 °C. Nachdem man sich durch ein Dünnschichtchromatogramm (wie bei a) vom Ende der Reaktion überzeugt hat, versetzt man die Lösung mit 60 ml konz. Natronlauge und rührt zur Abspaltung der Acetylgruppe weitere 4 Stunden bei 95 °C. Nach dem Abkühlen auf 50° stellt man den pH mit konz. Salzsäure auf 3,5, setzt zur besseren Abscheidung des Farbstoffes noch Kochsalz zu und saugt nach einstündigem Rühren ab.

e) Acylierung

Die Paste wird in 500 ml Wasser angerührt und auf 35 °C erwärmt. Man streut dann 24 g 2,3-Dichlorinoxalincarbonsäurechlorid ein und hält den pH zwischen 7 und 8 mit 20%iger Sodalösung. Man rührt solange nach, bis im Dünnschichtchromatogramm der nicht acylierte Farbstoff verschwunden ist. Nach dem Klären wird der Farbstoff mit 10 Vol.-% Kochsalz ausgesalzen. Man saugt ab und trocknet bei 70° im Umlufttrockenschrank. Nach dem Mahlen erhält man ein dunkles Pulver, das sich mit blauer Farbe in Wasser löst. Der Farbstoff entspricht der Formel

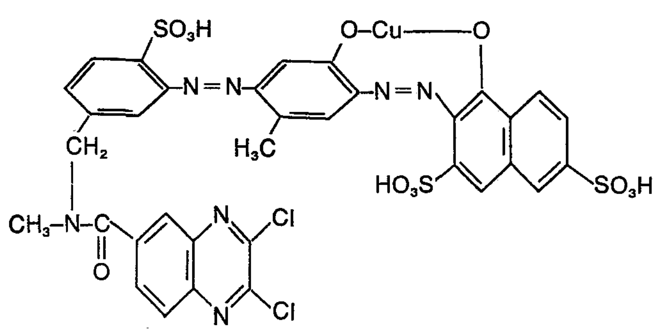

Nach der Arbeitsweise dieses Beispiels resultieren ähnliche Farbstoffe, wenn man sinngemäss die in nachfolgender Tabelle aufgeführten Diazo-, Mittel- und Endkomponenten verwendet.

| Beispiel | Diazokomponente | Mittelkomponente | Endkomponente |
|---|---|---|---|
| 2 | 1-Amino-2-sulfo-5-N-methylaminomethyl-benzol | 1-Amino-2-methoxy-5-methyl-benzol | 1-Hydroxy-4,8-disulfo-naphthalin |
| 3 | „ | „ | 1-Hydroxy-4,6-disulfo-naphthalin |
| 4 | „ | „ | 2-Hydroxy-5,7-disulfo-naphthalin |
| 5 | „ | „ | 2-Hydroxy-3,6-disulfo-naphthalin |
| 6 | 1-Amino-2-sulfo-5-aminomethyl-benzol | „ | 1-Hydroxy-3,6-disulfo-naphthalin |
| 7 | „ | 1-Amino-2-methoxy-benzol | „ |
| 8 | 1-Amino-2-sulfo-5-N-methylaminomethyl-benzol | „ | „ |

**Patentansprüche**

1. Verfahren zur Herstellung von Farbstoffen der Formel

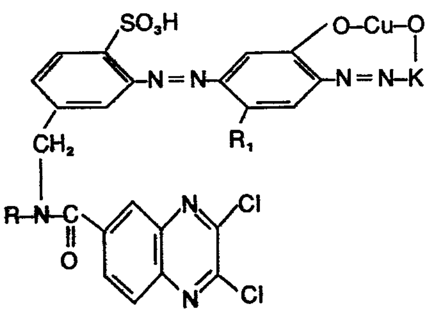

worin

R = H, $C_1$–$C_4$-Alkyl,

$R_1$ = H, $C_1$–$C_2$-Alkyl, $C_1$–$C_2$-Alkoxy,

K = Rest einer 1-Hydroxy- oder 2-Hydroxy-naphthalinsulfonsäure, dadurch gekennzeichnet, dass man eine Diazokomponente der Formel

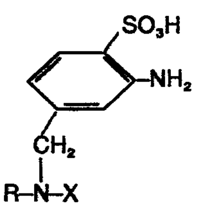

worin

X = Rest einer Acylkomponente mit einer Kupplungskomponente der Formel

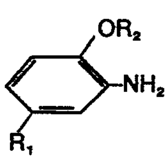

worin

$R_2$ = $C_1$–$C_2$-Alkyl kuppelt, weiterdiazotiert, mit einer Hydroxy-naphthalinsulfonsäure der Formel

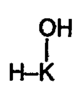

kuppelt, entmethylierend kupfert, die Acylgruppe X abspaltet und anschliessend die Aminogruppe mit 2,3-Dichlorchinoxalin-carbonsäurechlorid kondensiert.

2. Verfahren zur Herstellung von Diazokupferkomplexen, dadurch gekennzeichnet, dass man ein diazotiertes Amin der Formel

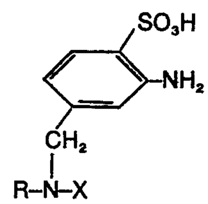

worin

X = Rest einer Acylkomponente mit einer Kupplungskomponente der Formel

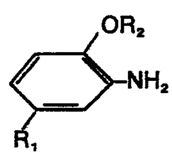

worin

$R_2$ = $C_1$–$C_2$-Alkyl kuppelt, weiterdiazotiert, mit einer Hydroxy-naphthalinsulfonsäure der Formel

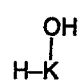

kuppelt, entmethylierend kupfert und anschliessend die Acylgruppe X abspaltet.

3. Verbindungen der Formel

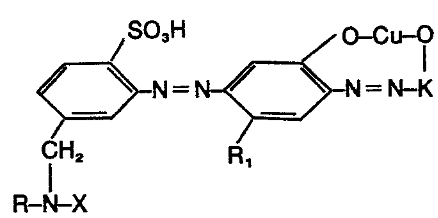

worin

R = H, $C_1$–$C_4$-Alkyl,

$R_1$ = H, $C_1$–$C_2$-Alkyl, $C_1$–$C_2$-Alkoxy,

K = Rest einer 1-Hydroxy- oder 2-Hydroxy-naphthalinsulfonsäure,

X = Rest einer Acylkomponente.

**Claims**

1. Process for the preparation of dyestuffs of the formula

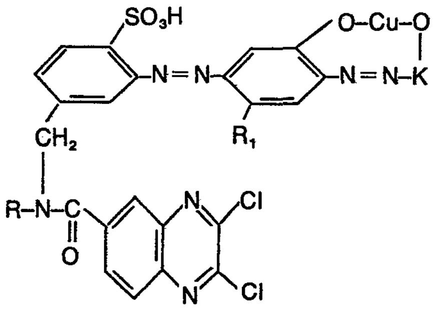

wherein

R = H or $C_1$–$C_4$-alkyl,

$R_1$ = H, $C_1$–$C_2$-alkyl or $C_1$–$C_2$-alkoxy and

K = the radical of a 1-hydroxy- or 2-hydroxy-naphthalenesulphonic acid,

characterised in that a diazo component of the formula

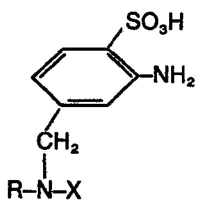

wherein

X = the radical of an acyl component, is coupled with a coupling component of the formula

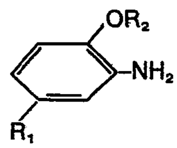

wherein

$R_2$ = $C_1$–$C_2$-alkyl, the coupling product is diazotised again, the diazotisation product is coupled with a hydroxy-naphthalenesulphonic acid of the formula

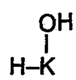

the coupling product is subjected to demethylating coppering, the acyl group X is split off and the amino group is then subjected to a condensation reaction with 2,3-dichloroquinoxalinecarboxylic acid chloride.

2. Process for the preparation of disazo copper compexes, characterised in that a diazotised amine of the formula

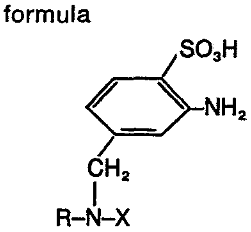

wherein

X = the radical of an acyl component, is coupled with a coupling component of the formula

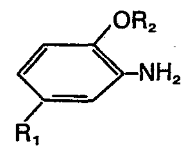

wherein

$R_2$ = $C_1$–$C_2$-alkyl, the coupling product is diazotised again, the diazotisation product is coupled with a hydroxy-naphthalenesulphonic acid of the formula

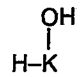

the coupling product is subjected to demethylating coppering and the acyl group X is then split off.

3. Compounds of the formula

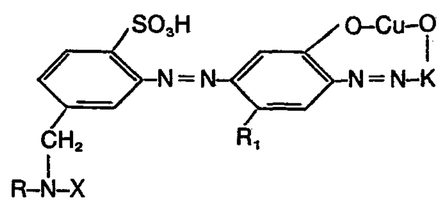

wherein

R = H or $C_1$–$C_4$-alkyl,

$R_1$ = H, $C_1$–$C_2$-alkyl or $C_1$–$C_2$-alkoxy,

K = the radical of a 1-hydroxy- or 2-hydroxy-naphthalenesulphonic acid, and

X = the radical of an acyl component.

**Revendications**

1. Procédé pour la fabrication de colorants de formule

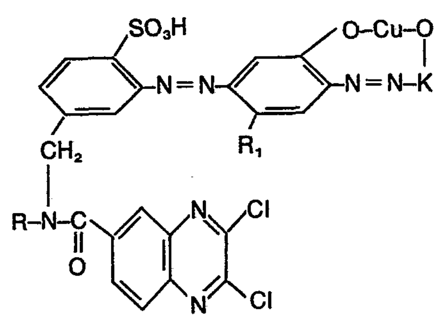

dans laquelle

R = H, alkyle en $C_1$–$C_4$,

$R_1$ = H, alkyle en $C_1$–$C_2$, alcoxy en $C_1$–$C_2$,

K = reste d'un acide 1-hydroxy- ou 2-hydroxy-naphthalènesulfonique, caractérisé en ce que l'on copule un composant diazo de formule

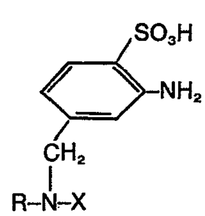

dans laquelle X = reste d'un composant acyle, avec un composant de copulation de formule

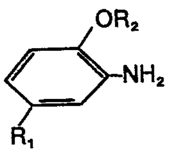

dans laquelle $R_2$ = alkyle en $C_1$–$C_2$, on diazote à nouveau, on copule avec un acide hydroxynaphthalènesulfonique de formule

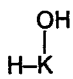

on effectue le cuivrage déméthylant, on élimine le groupe acyle X et ensuite on condense le groupe amino avec le chlorure de 2,3-dichloroquinoxalinecarbonyle.

2. Procédé pour la fabrication de complexes bisazoïques de cuivre, caractérisé en ce que l'on copule une amine de formule

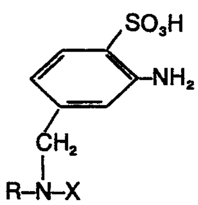

diazotée, dans laquelle X = reste d'un composant acyle, avec un composant de copulation de formule

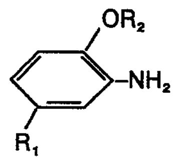

dans laquelle $R_2$ = alkyle en $C_1$–$C_2$, on diazote à nouveau, on copule avec un acide hydroxynaphthalènesulfonique de formule

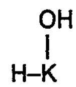

on effectue un cuivrage déméthylant et ensuite on élimine le groupe acyle X.

3. Composés de formule

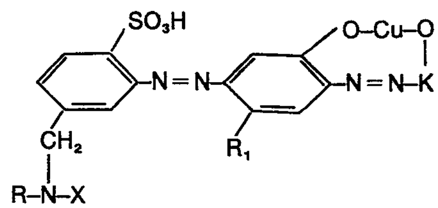

dans laquelle R

R = H, alkyle en $C_1$–$C_4$,

$R_1$ = H, alkyle en $C_1$–$C_2$, alcoxy en $C_1$–$C_2$,

K = reste d'un acide 1-hydroxy- ou 2-hydroxynaphthalènesulfonique,

X = reste d'un composant acyle.